# EUROPEAN PATENT SPECIFICATION

(11) **EP 3 045 789 B1**
(45) Date of publication and mention of the grant of the patent: **20.09.2017**
(21) Application number: 15199281.5
(22) Date of filing: 10.12.2015
(51) Int. Cl.: F16K 11/087, F02B 37/12, F02M 35/10

(54) **FLUID CONTROL DEVICE**
FLUIDSTEUERUNGSVORRICHTUNG
DISPOSITIF DE CONTROLE DE FLUIDES

(30) Priority: 15.01.2015 EP 15290007
(43) Date of publication of application: 20.07.2016
(73) Proprietor: MANN + HUMMEL GMBH, 71636 Ludwigsburg (DE)
(72) Inventor: Raimbault, Vincent, 53230 Cosmes (FR); Migaud, Jérôme, 35500 Vitré (FR); Sechet, Jocelin, 53150 Montsûrs (FR); Voegele, Christophe, 53470 Sace (FR); Grandin, Thomas, 35220 Saint Jean sur Vilaine (FR)

(56) References cited:
- WO-A1-00/15985
- WO-A1-97/05413
- WO-A1-99/17008
- WO-A2-98/37342
- WO-A2-2008/125571
- DE-A1- 4 210 659
- DE-A1- 10 314 629
- DE-U1- 9 002 393
- DE-U1-202013 008 996
- US-A- 2 996 083
- US-A- 4 173 234

## Description

### Technical Field

The invention relates to a fluid control device, in particular to an air intake shifter for air ducts of internal combustion engines of vehicles, more particularly, it relates to a charge air duct for a turbocharged engine, such as a one-stage turbocharged engine.

### Prior Art

Charge air within the meaning of the invention shall be understood as compressed air, compressed by an exhaust turbocharger or any other kind of charger or compressor.

For turbocharged engines, geometry (diameter and length) of charge air ducts (also called charge air delivery ducts) is tuned to take benefits from pressure waves for improving the air filling into the engine cylinders and thus increase the output torque.

However, optimal geometry of charge air ducts is dependent on engine speed. At high engine speeds, for instance above around 1500 rpm (revolutions per minute), and high load, the turbocharger compresses the supplied air in an effective manner. Under these engine operating conditions, a charge air duct of small length and larger diameter is suitable in order to reduce pressure loss and increase the engine power.

At low engine speeds (around 1250 rpm for instance) and part load operation, the turbocharger compressor is not very effective (the charging effect of the turbocharger is poor and limits the engine output torque). Under these engine operating conditions, a longer duct having a reduced inlet diameter is appropriate in order to increase the engine feeding (i.e. the mass of gas introduced into the combustion chamber) and thus the volumetric efficiency.

Conventional charge air ducts have a fixed length, which is a tradeoff between engine torque and power. With a charge air duct of fixed length, the engine performance is optimized at a specific engine speed, but not on a large operating range. Also, because of harsh environmental requirements in the automotive sector, aiming to reduce fuel consumption and C0₂ emissions, there is a great demand for increase in the engine output torque of a turbocharged engine in the low engine speed range.

Therefore, it is desirable for optimal engine control to have the possibility to change the air inlet of a combustion engine between different air duct branches according to engine speed and load condition.

DE10314629A1 discloses an induction system for an internal combustion engine which has a rotary valve directing the incoming fuel/air mixture either through a short wide induction pipe or a narrow long induction pipe. The fuel/air mixture passes through an inlet channel into a chamber with several short wide tubes and long narrow tubes leading to the individual cylinders. A rotary valve body forms part of a valve assembly and is accommodated in a cylindrical housing. The housing has a wide opening for each cylinder and a narrow opening. The valve body is rotated to line up wide or narrow passages with the entry port for each cylinder.

The WO 97/05413 A1 displays an arrangement of a distributing valve for fluids, and comprising a housing and internally in the housing a rotatable hemispherical fluid distributing element, where the housing comprises a number of inlets each from its source of fluid and one main outlet for a common flow of fluid which is led out of the housing.

DE 90 02 393 U1 displays a plug valve which is radially centered on the axis of rotation and is fixed between a lower housing portion and a valve body. The axial-groove ball bearing, which is centered on the axis of rotation, is fixed between the upper housing-part and the flat front face of the plug.

From WO 00/15985 A1 a switch valve (10) is known provided with an upper body having a plurality of outlet ports and lower body housing with inlet port. The switch valve includes a ball member which is rotatable within the switch valve body for selective fluid communication between the inlet port and the selected one of the plurality of outlet ports.

WO 98/37342 A2 presents a changeover valve which accommodates thermal transients which is operable over a range of temperatures includes a crossover member and a seat assembly in each outlet passage, a thrust bearing rotatably supporting the crossover member and a split load ring comprising an inner ring and an outer ring threaded into the changeover valve body.

From DE 42 10 659 A1 a rotation-symmetrical plug is known which is located in the housing rotatable around its axis and which can be turned by means of a switch mechanism into different positions. The main connection and one end of the arc-shaped passage are arranged coaxially to the rotary axis and the arc-shaped center line of the passage lies in a plane running through the rotary axis.

The document WO 99/170008 A1 shows charge air systems including a small electric motor-driven compressor for supplying charge air to four-cycle internal combustion engines, including systems with turbocharger charge air compressors in series and parallel connection.

US 2 996 083 A shows a valve for communicating a plurality of lines with a main line and for selectively by-passing flow through any one of said plurality of lines to a secondary line, and including, a substantially elongate body having upper and lower sections and with a peripheral wall to define a chamber therein, a plurality of flow lines opening into ports in the wall of the body and to be in communication with the chamber at the upper section of the body.

From US 4 173 234 A a valve is known for communicating a plurality of lines with a main line and for selectively by-passing flow through any one of said plurality of lines to a secondary line, and including, a substantially elongate body having upper and lower sections and with a peripheral wall to define a chamber therein, a plurality of flow lines opening into ports in the wall of the body and to be in communication with the chamber at the upper section of the body.

### Disclosure of the Invention

It is an object of the invention to provide a fluid control device, in particular an air intake shifter for air ducts, which is reliable, compact, cheap to manufacture and easy to assemble, and which can easily be adapted to different engine operating modes.

This object is achieved by a fluid control device according to claim 1, comprising a housing with one first port and with at least one second port, wherein a control means is arranged within the housing to control a fluid flow between the first port and the at least one second port. The other claims, the description and the drawings describe advantageous embodiments of the invention.

According to a first aspect of the invention, a fluid control device according to claim 1, in particular an air intake shifter, is proposed, which comprises a housing with one first port having a first main axis and with at least one second port having at least one second main axis. Advantageously, the first main axis is perpendicular to the cross section of the first port and the one second main axis is perpendicular to the cross section of the at least one second port.
The first main axis and the at least one second main axis are aligned off-axis to one another. A control means is arranged within the housing to control a fluid flow between the first port and the at least one second port. The control means comprises a valve body being rotatable around the first main axis of the first port, whereas the valve body comprises a fluid path for guiding the fluid through the valve body.
The control means are enabling the fluid flow between the first port and the second port by connecting the first and the second port via the fluid path or between the first port and a third port by connecting the first and the third port via the fluid path. The flow direction of the fluid can be from the second port or third port to the first port or alternatively from the first port to the second or the third port.
The proposed inventive fluid control device deals with a product which is able to shift a fluid flow path from one first port to at least a second port while keeping the pressure losses of the fluid during passage through the fluid control device low. This exhibits a significant advantage over current fluid control devices according to state of the art using flaps or valves with axles in the main path of the fluid flow which create high level of fluid pressure drops even at open positions of the fluid path, where even at open positions the axles and the flaps are remaining in the middle or near the middle of the fluid path. The inventive fluid control device on the contrary is able to withstand high fluid pressures and high levels of fluid pulsation without significant losses of fluid pressure. Further, the fluid control device is characterized by a high level of fluid tightness at the end positions of a valve body of the control means.

The inventive fluid control device may be used as an air intake shifter for air ducts of internal combustion engines of vehicles if the ports of the fluid control device are connected to two inlets and one outlet of the air duct, for instance. Thus it may be part of an active charge air duct. Alternatively, the fluid control device may be used as a shutter, if the ports of the fluid control device are connected to one inlet and one outlet of the air duct.

The valve body of the control means of the inventive fluid control device is able to rotate around the first main axis of the first port, thus an axle of the valve body does not cause any significant pressure drop of the fluid flow as it is directed in the fluid flow direction. The fluid path, which may be manufactured by drilling the valve body in order to provide a unique fluid path inside the valve body, is always connected and open to the first port, whereas the other side of the fluid path is either connected and open to a second port or by rotating the valve body to a third port. Alternatively the fluid path may be partly open to both second and third ports, thus providing a partly open connection from the second and the third port to the first port and mixing the fluid flows from both second and third port when feeding to the first port.

In a further alternative, if the fluid control device does not exhibit a third port, it can be used to open or close the second port in order to work as a shutter for the second port.

The valve body has at least one outer surface section having a spherical shape. If the valve body is constructed as a sphere or at least part of the valve body is realized as a part of a sphere, where the valve body may be of generally spherical shape, but with edges and recesses, it is quite convenient and efficient to rotate it around the main axis of the first port. The moment of inertia can thus be kept quite low thus enabling to rotate the valve body at a high speed and with a low activating torque.

Therefore at least a section of an inner surface of the housing has a spherical shape corresponding to the outer surface section of the valve body. Thus sealing of the valve body against the housing can be achieved very efficiently and reliably with low friction values of the valve body to the inner surface of the housing.

A seal groove for a gasket is formed in the valve body to receive the gaskets. It extends along the surface into the valve body. With an integration of the groove in the valve body the tolerances between valve body with gasket and the valve housing can be kept small. The package needed for the sealing area is optimized by forming the groove within the valve body. The sealing area on side of the housing can be shaped in a flat manner. The manufacturing of the housing as an injection molded plastic part is easy and possible without any complex tool. Forming a groove for a gasket in a convex curved valve body is less complex than a forming a groove on a concave curved inner surface of a housing. In an advantageous embodiment the inner surface of the housing does not have any gasket groove shaped features in the sealing area.

According to the invention, the housing comprises at least a first shell and a second shell. This enables convenient assembly conditions, because thus the valve body may be inserted into one of the shells, then the other shell may be put on top of the valve body and the first shell and finally both shells are closed and tightened by welding. This also exhibits a very modular construction of the fluid control device, because by changing one of the two shells, where the first shell, for instance, carries the first port and the second shell carries the second and the third port, an alternative type of fluid control device may be assembled, exhibiting different ports concerning mechanical interfaces or a different number of ports or changing the fluid control device from an air intake shifter to a shutter or vice versa.

Favorably, in a first position of a valve body of the control means a fluid connection may be established between the first port and the at least one second port and in a second position of a valve body of the control means the fluid connection between the first port and the at least one second port may be closed. Thus a switching or shifting or alternatively a shutter behavior of the fluid control device may be realized where the fluid path is open from the first port to the second port in one position, whereas the fluid path from the first port to the second port is closed in a second position. If the housing carries a third port, in the second position the fluid path may be open from the first port to the third port. If the housing does not carry a third port then the fluid control device is working as a shutter and closes the fluid path simply in the second position.

In an advantageous embodiment, the valve body may be arranged to provide a fluid connection alternatively between the first port and the second port or between the first port and at least a third port. This is the realization of an air intake shifter, for instance, where the air inlet to a combustion engine is shifted between different air ducts, e.g., from a charge air duct to a pulsating air duct.

Due to a further favorable embodiment, in at least one position of a valve body of the control means the second and third ports may be at least partially open to the first port. Thus a mixing function between two input flows from the second and the third port guided to the first port may be realized for optimizing a certain combustion function of an engine, for instance.

Due to the invention the valve body is two-dimensionally sealed by gaskets to the first port and the at least one second port. The fluid tightness is ensured by a sealing area at the interface between an opening of the fluid path in the valve body and the first or second port provided in the housing of the fluid control device. The sealing area is two-dimensional to ensure the reliability of the sealing function. This is achieved by a gasket around the two-dimensional plane of the opening of the fluid path in the valve body in cylinder shape, sealed to the spherical inner surface of the housing around the first or second port. A groove for a gasket around a two-dimensional plane formed by the valve body results in a tight sealing.

Advantageously, the valve body may be rotatable by action of a driving mechanism located outside the housing. A rotating axle of the valve body may be fed through the housing in order to be coupled to an actuator as a driving mechanism of the control means of the fluid control device. Such an actuator can be a vacuum actuator, e.g., which is a very common type of actuator in combination with combustion engines, particularly in vehicles. Alternatively an electric actuator can be used for rotating the valve body.

According to the invention the housing and the valve body are made of plastics materials. Plastics materials are not only very convenient for manufacturing different shapes of devices, but are also a cheap and flexible way of producing in a high output. Further it is advantageous to use, for instance, a Teflon segment for the sealing area of the valve body and as a counterpart other plastics materials for the correspondding inner surface of the housing. Thus a very efficient and reliable sealing function is achievable in an economic way. A segment for the sealing can consist of a suitable material different to Teflon as well.

According to another aspect of the invention, an air intake shifter according to claim 6 is proposed, comprising a fluid control device, having a first port, a second port and a third port, wherein the first port is alternatively coupleable to the second port or the third port by a control means, which is rotatable about a main axis of the first port, which main axis is perpendicular to the cross section of the first port. A switching or shifting behavior of the fluid control device may be realized where the fluid path is open from the first port to the second port in one position, whereas the fluid path from the first port to the second port is closed in a second position. If the housing carries a third port, in the second position the fluid path may be open from the first port to the third port. This is the realization of an air intake shifter, for instance, where the air inlet to a combustion engine is shifted between different air ducts, from a charge air duct to a pulsating air duct, for instance.

Advantageously, the first port may be an air outlet and the second port may be an air inlet for charge air and the third port may be an air inlet for pulsating air. The charge air may be generated by a turbocharger, whereas the pulsating air may be generated by a resonance device. Thus it is possible to get more air into a combustion engine, to achieve a higher level of pulsation and to increase an engine efficiency. Different load conditions of combustion engines may be optimized by an optimized supply of air for the combustion process. The fluid control device can thus be used for a shifting of the air inlet according to the load conditions of the combustion engine. Shifting may be achieved dependent on specific engine speeds and engine load, or other engine parameters like temperature, pressure, mass flow or others.

According to another aspect of the invention, a fluid shutter according to claim 8 is proposed, comprising a fluid control device, having a first port and a second port, wherein a fluid connection between the first port and the second port is switchable by a control means, which is rotatable about a main axis of the first port, which main axis is perpendicular to the cross section of the first port. A shutter behavior of the fluid control device may be realized where the fluid path is open from the first port to the second port in one position of a valve body, whereas the fluid path from the first port to the second port is closed in a second position. If the housing does not carry a third port then the fluid control device is working as a shutter and closes the fluid path simply in the second position of the valve body.

### Brief Description of the Drawings

The present invention together with the above-mentioned and other objects and advantages may best be understood from the following detailed description of the embodiments, but not restricted to the embodiments, wherein is shown in:
- Figure 1: in a cross cut view a first example embodiment of a fluid control device according to the invention in a first position of a valve body of a control means where a fluid path is open from a first port to a second port;
- Figure 2: in a cross cut view the example embodiment of the fluid control device according to Figure 1 in a second position of a valve body of a control means where the fluid path is open from the first port to a third port; and
- Figure 3: in an isometric view the example embodiment of the fluid control device according to Figure 1 with a first port, a second port, and a third port.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

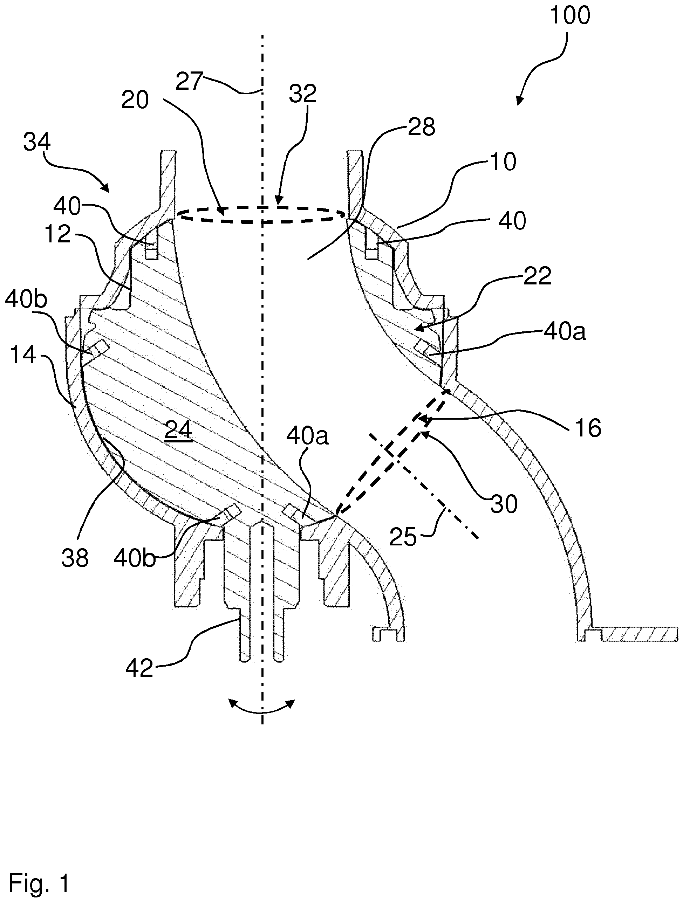

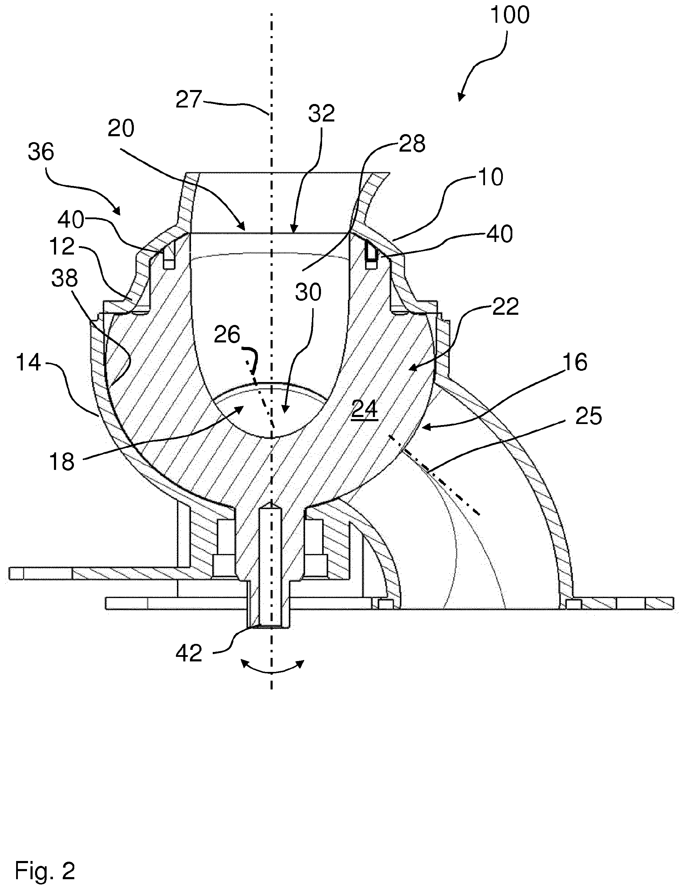

Figure 1 depicts in a cross cut view a first example embodiment of a fluid control device 100 according to the invention in a first position of a valve body 24 of a control means 22, where a fluid path 28 is open from a first port 20 to a second port 16. The fluid control device 100 in Figure 1, for instance an air intake shifter, is comprising a housing 10 with one first port 20 having a first main axis 27 perpendicular to the cross section of the first port 20 and with one second port 16 having one second main axis 25 perpendicular to the cross section of the second port 16. The fluid control device 100 also has a third port 18, which cannot be seen in Figure1, but is depicted in Figure 2. The first main axis 27 and the second main axis 25 are aligned off-axis to one another. The control means 22 is arranged within the housing 10 to control a fluid flow between the first port 20 and the second port 16, as well as the third port 18.

The control means 22 comprises a valve body 24 being rotatable around the first main axis 27 of the first port 20 for changing the position of a valve body 24 of the control means 22.

The valve body 24 comprises a fluid path 28 for guiding the fluid through the valve body 24. The fluid path 28 may be manufactured by drilling the valve body 24. The valve body 24 has an outer surface section having at least partly a spherical shape, whereas at least a section of the inner surface 38 of the housing 10 has a spherical shape corresponding to the outer surface section of the valve body 24. Accordingly, rotating of the valve body 24 within the housing 10 around the main axis 27 can easily be achieved, and the surface 38 of the housing 10 serves as a bearing for the valve body 24. The housing 10 comprises a first shell 12 and a second shell 14. The valve body 24 is mainly carried by the second shell 14. The second shell 14 incorporates the second port 16 and the third port 18 (shown in Figure 2), whereas the first port 20 is located in the first shell 12. The first shell 12 closes the second shell 14 to get a sealed housing 10.

In the first position 34 of the valve body 24 of the control means 22, shown in Figure 1, a fluid connection is established between the first port 20 and the second port 16, thus enabling fluid flow from the second port 16 to the first port 20 via fluid path 28 and vice versa. The valve body 24 is arranged to provide a fluid connection alternatively between the first port 20 and the second port 16 and the second port 16 or between the first port 20 and at least a third port 18.

The valve body 24 is two-dimensionally sealed to the first port 20 by gaskets 40 and to the second port 16 by gaskets 40a. The fluid tightness may be ensured by a sealing area at the interface between the opening 32 of the fluid path 28 in the valve body 24 and the first port 20 provided in the housing 10 of the fluid control device 100. The sealing area may be kept two-dimensional to ensure the reliability of the sealing function. This can be achieved by a gasket 40 around the two-dimensional plane of the opening 32 of the fluid path 28 in the valve body 24 in cylinder shape, sealed to the spherical inner surface 38 of the housing 10 around the first port 20. In a similar way the valve body 24 is sealed to the inner surface 38 of the housing 10 with the gasket 40a around the opening 30 of the fluid path 28 and with the gasket 40b around the closed area of the valve body 24, if the valve body 24 is in the second position 36, where the fluid path 28 is open from the first port 20 to the third port 18 and closed from the first port 20 to the second port 16. Thus the second port 16 is sealed by the valve body 24 via the gasket 40b. The seal grooves for the gaskets 40, 40a, 40b are formed in the valve body 24 to receive the gaskets. The inner surface 38 of the housing 10 does not have any gasket groove shaped features in the sealing area.

The valve body 24 is rotatable by action of a driving mechanism located outside the housing 10. For this purpose a rotating axle 42 of the valve body 24 is fed through the housing 10 in order to be coupled to an actuator as a driving mechanism of the control means 22 of the fluid control device 100. Such an actuator can be a vacuum actuator, e.g., which is a very common type of actuator in combination with combustion engines, particularly in vehicles. Alternatively an electric actuator can be used for rotating the valve body 24.

The housing 10 and/or the valve body 24 can favorably be made of plastics materials. It is advantageous to use, for instance, a Teflon segment for the sealing area of the valve body 24 and as a counterpart other plastics materials for the corresponding inner surface 38 of the housing 10. Thus, a very efficient and reliable sealing function is achievable in an economic way.

In Figure 1 the first position 34 of the valve body 24 of the control means 22 with the fluid connection between the first port 20 and the second port 16 is shown, whereas in Figure 2 the second position 36 of the valve body 24 with the fluid connection between the first port 20 and the third port 18 is shown. In the second position 36 of a valve body 24 the fluid connection between the first port 20 and the second port 16, 18 is closed.

Figure 2 depicts in a cross cut view the example embodiment of the fluid control device 100 according to Figure 1 in a second position 36 where the fluid path 28 is open from the first port 20 to a third port 18. In this second position 36 the valve body 24 is rotated around the main axis 27 such that the fluid path 28 connects the first port 20 and the third port 18 and the fluid flow between the third port 18 and the first port 20 is enabled. The opening 30 of the fluid path 28 is connected to the third port 18, whose main axis 26 is aligned off-axis to the main axis 27 of the first port 20. The second port 16 is closed by the valve body 24.

It is possible that in at least one position 34, 36 of the valve body 24 or in a transition between end positions the second and third ports 16, 18 may be at least partially open to the first port 20, resulting in a mixing of the fluid flow from different branches of the fluid duct via the second and the third port 16, 18.

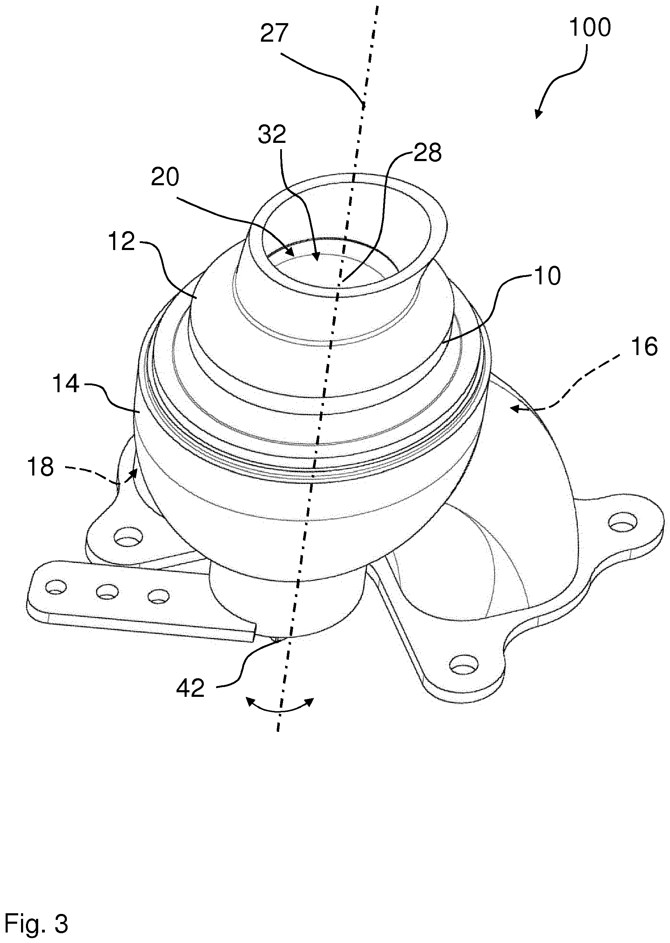

In Figure 3 an isometric view of the example embodiment of the fluid control device 100 according to Figure 1 with a first port 20, a second port 16, and a third port 18 is shown. The housing 10 comprises a first shell 12 and a second shell 14 assembled and sealed together. The second shell 14 carries the second port 16 and in an axially distant position the third port 18. The first shell 12 carries the first port 20 on top of the housing 10. The first port 20 is always connected to the opening 32 of the valve body 24 to the fluid path 28, as the valve body 24 is rotatable around the main axis 27 of the first port 20.

In such a configuration the fluid control device 100 may represent an air intake shifter, which comprises the fluid control device 100, having a first port 20, a second port 16 and a third port 18, wherein the first port 20 is alternatively coupleable to the second port 16 or the third port 18 by a control means 22, which is rotatable about a main axis 27 of the first port 20, which main axis 27 is perpendicular to the cross section of the first port 20. In this case, the first port 20 is an air outlet and the second port 16 is an air inlet for charge air and the third port 18 is an air inlet for pulsating air. The charge air may be generated by a turbocharger, whereas the pulsating air may be generated by a resonance device. Thus it is possible to get more air into a combustion engine, to achieve a higher level of pulsation and to increase an engine efficiency.

Alternatively, if the fluid control device 100 carries only a first and a second port 20, 16, the fluid control device 100 may represent a fluid shutter comprising a fluid control device 100, having a first port 20 and a second port 16, wherein a fluid connection between the first port 20 and the second port 16 is switchable by a control means 22, which is rotatable about a main axis 27 of the first port 20, which main axis 27 is perpendicular to the cross section of the first port 20. A shutter behavior of the fluid control device 100 may be realized where the fluid path 28 is open from the first port 20 to the second port 16 in one position 34 of the valve body 24, whereas the fluid path 28 from the first port 20 to the second port 16 is closed in a second position 36 of the valve body 24.

## Claims

1. A fluid control device (100), in particular an air intake shifter, comprising a housing (10) with one first port (20) having a first main axis (27) and with at least one second port (16, 18) having at least one second main axis (25, 26), wherein
(i) the first main axis (27) and the at least one second main axis (25, 26) are aligned off-axis to one another,
(ii) a control means (22) is arranged within the housing (10) to control a fluid flow between the first port (20) and the at least one second port (16, 18),
(iii) the control means (22) comprising a valve body (24) being rotatable around the first main axis (27) of the first port (20), the valve body (24) comprising a fluid path (28) for guiding the fluid through the valve body (24),
wherein valve body (24) has at least one outer surface section having a spherical shape, wherein at least a section of an inner surface (38) of the housing (10) has a spherical shape corresponding to the outer surface section of the valve body (24), wherein the housing (10) comprises at least a first shell (12) and a second shell (14), wherein the first shell and finally both shells are closed and tightened by welding, wherein the valve body (24) is two-dimensionally sealed by gaskets (40) to the first port (20) and the at least one second port (16, 18), wherein the housing (10) and the valve body (24) are made of plastics materials, wherein the sealing area is two-dimensional, wherein the gasket (40) around the two-dimensional plane of the opening of the fluid path in the valve body (24) has a cylinder shape and is sealed to the spherical inner surface (38) of the housing (10) around the first port (20) or second port (16, 18), wherein a groove for a gasket (40) is formed around a two-dimensional plane by the valve body (24).

2. The fluid control device according to claim 1, wherein in a first position (34) of a valve body (24) of the control means (22) a fluid connection is established between the first port (20) and the at least one second port (16, 18) and in a second position (36) of the valve body (24) of the control means (22) the fluid connection between the first port (20) and the at least one second port (16, 18) is closed.

3. The fluid control device according to any one of the preceding claims, wherein the valve body (24) is arranged to provide a fluid connection alternatively between the first port (20) and the second port (16) or between the first port (20) and at least a third port (18).

4. The fluid control device according to claim 3, wherein in at least one position of a valve body (24) of the control means (22) the second and third ports (16, 18) are at least partially open to the first port (20).

5. The fluid control device according to any one of the preceding claims, wherein the valve body (24) is rotatable by action of a driving mechanism located outside the housing (10).

6. An air intake shifter comprising a fluid control device (100) according to any of the preceding claims, having a first port (20), a second port (16) and a third port (18), wherein the first port (20) is alternatively coupleable to the second port (16) or the third port (18) by the control means (22), which is rotatable about the main axis (27) of the first port (20), which main axis (27) is perpendicular to the cross section of the first port (20).

7. The air intake shifter according to claim 6, wherein the first port (20) is an air outlet and the second port (16) is an air inlet for charge air and the third port (18) is an air inlet for pulsating air.

8. A fluid shutter comprising a fluid control device (100) according to any one of the claims 1 to 5, having a first port (20) and a second port (16), wherein a fluid connection between the first port (20) and the second port (16) is switchable by the control means (22), which is rotatable about the main axis (27) of the first port (20), which main axis (27) is perpendicular to the cross section of the first port (20).

## Patentansprüche

1. Fluidsteuereinrichtung (100), insbesondere ein Lufteinlassschieber, umfassend ein Gehäuse (10) mit einem ersten Kanal (20) mit einer ersten Hauptachse (27) und mit mindestens einem zweiten Kanal (16, 18) mit mindestens einer zweiten Hauptachse (25, 26), wobei
I. die erste Hauptachse (27) und die mindestens zweite Hauptachse (25, 26) achsversetzt zueinander ausgerichtet sind,
II. ein Steuermittel (22) in dem Gehäuse (10) angeordnet ist, um die Fluidströmung zwischen dem ersten Kanal (20) und dem mindestens zweiten Kanal (16, 18) zu regeln,
III. das Steuermittel (22) einen Ventilkörper (24) umfasst, welcher sich um die erste Hauptachse (27) des ersten Kanals (20) drehen kann, wobei der Ventilkörper (24) einen Fluidpfad (28) zum Leiten des Fluids durch den Ventilkörper (24) umfasst,
wobei der Ventilkörper (24) mindestens einen äußeren Oberflächenabschnitt mit einer kugelförmigen Form hat, wobei mindestens ein Abschnitt einer inneren Oberfläche (38) des Gehäuses (10) eine kugelförmige Form hat, welche dem äußeren Oberflächenabschnitt des Ventilkörpers (24) entspricht, wobei das Gehäuse (10) mindestens eine erste Schale (12) und einer zweite Schale (14) aufweist, wobei die erste Schale und letztendlich beide Schalen mittels Verschweißen geschlossen und festgezogen werden, wobei der Ventilkörper (24) zweidimensional mittels Dichtungen (40) zu dem ersten Kanal (20) und dem mindestens einen zweiten Kanal (16, 18) abgedichtet ist, wobei das Gehäuse (10) und der Ventilkörper (24) aus Kunststoffmaterial hergestellt sind, wobei der Abdichtbereich zweidimensional ist, wobei die Dichtung (40) um die zweidimensionale Ebene der Öffnung des Fluidpfads in dem Ventilkörper (24) zylinderförmig ist und zu der kugelförmigen inneren Oberfläche (38) des Gehäuses (10) um den ersten Kanal (20) oder zweiten Kanal (16, 18) abgedichtet ist, wobei eine Nut für eine Dichtung (40) um eine zweidimensionale Ebene durch den Ventilkörper (24) gebildet ist.

2. Fluidsteuereinrichtung nach Anspruch 1, wobei in einer ersten Position (34) eines Ventilkörpers (24) des Steuermittels (22) ein Fluidanschluss zwischen dem ersten Kanal (20) und dem mindestens einen zweiten Kanal (16, 18) hergestellt ist und in einer zweiten Position (36) des Ventilkörpers (24) des Steuermittels (22) der Fluidanschluss zwischen dem ersten Kanal (20) und dem mindestens einen zweiten Kanal (16, 18) geschlossen ist.

3. Fluidsteuereinrichtung nach einem der obigen Ansprüche, wobei der Ventilkörper (24) so angeordnet ist, um einen Fluidanschluss abwechselnd zwischen dem ersten Kanal (20) und dem zweiten Kanal (16) oder zwischen dem ersten Kanal (20) und mindestens einem dritten Kanal (18) vorzusehen.

4. Fluidsteuereinrichtung nach Anspruch 3, wobei in mindestens einer Position eines Ventilkörpers (24) des Steuermittels (22) der zweite und dritte Kanal (16, 18) mindestens teilweise zum ersten Kanal (20) geöffnet sind.

5. Fluidsteuereinrichtung nach einem der obigen Ansprüche, wobei der Ventilkörper (24) durch einen außerhalb des Gehäuses (10) angeordneten Antriebsmechanismus drehbar ist.

6. Lufteinlassschieber umfassend eine Fluidsteuereinrichtung (100) nach einem der obigen Ansprüche, mit einem ersten Kanal (20), einem zweiten Kanal (16) und einem dritten Kanal (18), wobei der erste Kanal (20) abwechselnd mit dem zweiten Kanal (16) oder dem dritten Kanal (18) durch das Steuermittel (22) koppelbar ist, welches um die Hauptachse (27) des ersten Kanals (20) drehbar ist, welche Hauptachse (27) senkrecht zum Querschnitt des ersten Kanals (20) ist.

7. Lufteinlassschieber nach Anspruch 6, wobei der erste Kanal (20) ein Luftauslass und der zweite Kanal (16) ein Lufteinlass für Ladeluft und der dritte Kanal (18) ein Lufteinlass für pulsierende Luft ist.

8. Fluidverschluss umfassend eine Fluidsteuereinrichtung (100) nach einem der Ansprüche 1 bis 5, mit einem ersten Kanal (20) und einem zweiten Kanal (16), wobei ein Fluidanschluss zwischen dem ersten Kanal (20) und dem zweiten Kanal (16) durch das Steuermittel (22) schaltbar ist, welches um die Hauptachse (27) des ersten Kanals (20) drehbar ist, welche Hauptachse (27) senkrecht zum Querschnitt des ersten Kanals (20) ist.

## Revendications

1. Dispositif de commande de fluide (100), en particulier un décaleur d'admission d'air, comprenant un boîtier (10) avec un premier conduit (20) ayant un premier axe principal (27) et avec au moins un deuxième conduit (16, 18) ayant au moins un deuxième axe principal (25, 26), dans lequel
I. le premier axe principal (27) et ledit au moins un deuxième axe principal (25, 26) sont alignés désaxés l'un par rapport à l'autre,
II. un élément de commande (22) est disposé au sein du boîtier (10) pour commander un écoulement de fluide entre le premier conduit (20) et ledit au moins un deuxième conduit (16, 18),
III. l'élément de commande (22) comprend un corps de vanne (24) pouvant tourner autour du premier axe principal (27) du premier conduit (20), le corps de vanne (24) comprenant un chemin de fluide (28) pour guider le fluide à travers le corps de vanne (24),
dans lequel le corps de vanne (24) a au moins une section de surface externe ayant une forme sphérique, dans lequel au moins une section d'une surface interne (38) du boîtier (10) a une forme sphérique correspondant à la section de surface externe du corps de vanne (24), dans lequel le boîtier (10) comprend au moins une première enveloppe (12) et une seconde enveloppe (14), dans lequel la première enveloppe et en fin de compte l'une et l'autre des enveloppes sont fermées et serrées par soudage, dans lequel le corps de vanne (24) est scellé dans deux dimensions par des joints d'étanchéité (40) vers le premier conduit (20) et ledit au moins un deuxième conduit (16, 18), dans lequel le boîtier (10) et le corps de vanne (24) sont constitués de matières plastiques, dans lequel la zone de scellage est à deux dimensions, dans lequel le joint d'étanchéité (40) autour du plan à deux dimensions de l'ouverture du chemin de fluide dans le corps de vanne (24) a une forme de cylindre et est scellé à la surface interne sphérique (38) du boîtier (10) autour du premier conduit (20) ou deuxième conduit (16, 18), dans lequel une rainure destinée à un joint d'étanchéité (40) est formée autour d'un plan à deux dimensions par le corps de vanne (24).

2. Dispositif de commande de fluide selon la revendication 1, dans lequel, dans une première position (34) d'un corps de vanne (24) de l'élément de commande (22), une connexion de fluide est établie entre le premier conduit (20) et ledit au moins un deuxième conduit (16, 18) et, dans une seconde position (36) du corps de vanne (24) de l'élément de commande (22), la connexion de fluide entre le premier conduit (20) et ledit au moins un deuxième conduit (16, 18) est fermée.

3. Dispositif de commande de fluide selon l'une quelconque des revendications précédentes, dans lequel le corps de vanne (24) est disposé pour fournir une connexion de fluide alternativement entre le premier conduit (20) et le deuxième conduit (16) ou entre le premier conduit (20) et au moins un troisième conduit (18).

4. Dispositif de commande de fluide selon la revendication 3, dans lequel, dans au moins une position d'un corps de vanne (24) de l'élément de commande (22), les deuxième et troisième conduits (16, 18) sont au moins partiellement ouverts vers le premier conduit (20).

5. Dispositif de commande de fluide selon l'une quelconque des revendications précédentes, dans lequel le corps de vanne (24) peut tourner par l'action d'un mécanisme d'entraînement situé à l'extérieur du boîtier (10).

6. Décaleur d'admission d'air comprenant un dispositif de commande de fluide (100) selon l'une quelconque des revendications précédentes, ayant un premier conduit (20), un deuxième conduit (16) et un troisième conduit (18), dans lequel le premier conduit (20) peut être couplé alternativement au deuxième conduit (16) ou au troisième conduit (18) par l'élément de commande (22), qui peut tourner autour de l'axe principal (27) du premier conduit (20), lequel axe principal (27) est perpendiculaire à la section transversale du premier conduit (20).

7. Décaleur d'admission d'air selon la revendication 6, dans lequel le premier conduit (20) est une sortie d'air et le deuxième conduit (16) est une entrée d'air pour de l'air de suralimentation et le troisième conduit (18) est une entrée d'air pour de l'air pulsatoire.

8. Obturateur de fluide comprenant un dispositif de commande de fluide (100) selon l'une quelconque des revendications 1 à 5, ayant un premier conduit (20) et un deuxième conduit (16), dans lequel une connexion de fluide entre le premier conduit (20) et le deuxième conduit (16) est commutable par l'élément de commande (22), qui peut tourner autour de l'axe principal (27) du premier conduit (20), lequel axe principal (27) est perpendiculaire à la section transversale du premier conduit (20).
